# FASCICULE DE BREVET EUROPEEN

(11) **EP 0 809 817 B1**
(45) Date de publication et mention de la délivrance du brevet: **24.04.2002**
(21) Numéro de dépôt: 96901665.8
(22) Date de dépôt: 08.02.1996
(51) Int. Cl.: G02C 7/00, G02C 7/08, G02C 7/16

(54) **LUNETTES A HORIZON ARTIFICIEL**
BRILLE MIT KÜNSTLICHEM HORIZONT
ARTIFICIAL HORIZON SPECTACLES

(30) Priorité: 15.02.1995 BE 9500121; 23.06.1995 BE 9500561
(43) Date de publication de la demande: 03.12.1997
(73) Titulaire: Tassier, Philippe, 1950 Kraainem (BE)
(72) Inventeur: Tassier, Philippe, 1950 Kraainem (BE)
(74) Mandataire: Van Malderen, Joelle
(86) Numéro de dépôt international: BE9600010
(87) Numéro de publication internationale: WO9625685

(56) Documents cités:
- EP-A- 0 603 092
- WO-A-91/00541
- US-A- 2 535 321
- US-A- 4 172 662
- US-A- 4 185 903
- US-A- 4 948 244
- US-A- 5 355 182

## Description

### Objet de l'invention.

La présente invention porte sur des perfectionnements apportés aux lunettes, afin de fournir à leur utilisateur un "horizon" artificiel.

Le terme "lunettes" doit s'entendre dans le sens le plus large, aussi bien pour s'appliquer à des lunettes neutres, les lunettes à verres correcteurs, des lunettes de protection solaire qu'à des accessoires à fonction identique pouvant être montés sur des lunettes, tels que des appliques.

En réalité, la présente invention s'applique plus particulièrement à une monture de lunettes comprenant ou non des verres et présentant un horizon artificiel.

### Arrière-plan technologique.

De nombreux facteurs tant physiologiques que psychosomatiques peuvent provoquer des sensations de nausée du type mal de mer, ce terme s'étendant bien entendu à des symptômes similaires tels que mal de voiture, mal de l'air, etc.

Il est manifeste que ces symptômes sont causés par le mouvement, essentiellement le mouvement de roulis, et accessoirement de tangage, avec perte des repères spatiaux habituels.

Tout particulièrement en mer, les symptômes désagréables sont atténués ou supprimés en gardant le regard sur la ligne d'horizon. En revanche, dès que l'on perd les repères habituels, et en particulier lorsqu'on se trouve par exemple à l'intérieur d'un bateau et tout particulièrement lorsqu'on tente par exemple de lire ou d'écrire, on a l'impression que la table ou le livre se "dérobe", et le risque de mal de mer s'accentue.

Pour porter remède à ce phénomène et accroître le confort de l'utilisateur, l'invention se propose de substituer à la ligne d'horizon réelle telle qu'elle est perçue, un horizon artificiel donnant l'impression à l'utilisateur d'une ligne d'horizon stable en dépit des fluctuations qu'il subit lui-même sous l'influence du roulis.

Il est apparu que l'utilisation de lunettes de ce type confère à l'utilisateur une situation de stabilité qui concourt à réduire les symptômes généralement associés au mal de mer.

### Résumé de l'état de la technique.

Diverses techniques ont déjà été proposées pour permettre la rotation d'un verre dans une monture de lunettes. Ainsi, le brevet US-4948244 décrit un dispositif dans lequel le verre de lunette qui est en fait constitué par des lentilles multiples, peut tourner afin de permettre de modifier le type de lentille utilisé en fonction des souhaits de l'utilisateur. Ce dispositif n'est pas destiné à créer un horizon artificiel.

La publication EP-A-0603092 décrit un système de visualisation monté sur un casque destiné à des pilotes afin d'éviter la désorientation spatiale, et qui recrée un horizon artificiel dans la zone dite de vision périphérique. Ce dispositif n'est pas monté sur des lunettes, et est destiné à des usages très spécifiques. Il n'est pas envisageable non plus de le porter en permanence.

Le document WO-A-9100541 décrit des lunettes pourvues sur les verres de lignes qui sont essentiellement disposées soit horizontalement, soit verticalement, et qui permettent au porteur des lunettes d'atteindre un alignement de son corps, sa tête et ses mains avec l'objet qu'il désire visualiser tel qu'une balle de golf ou autre.

Le document US-A-5355182 décrit une paire de lunettes destinées à être également portées par un golfeur en vue de permettre l'alignement de la balle de golf avec la cible. Ces lunettes sont pourvues de verres présentant essentiellement deux zones ombrées différemment et séparées par une ligne qui présente un angle compris entre 5 et 15% avec l'horizontale.

Le document US-A-2535321 décrit des lunettes ajustables présentant deux zones séparées par une barrette fixe. Ces deux zones sont essentiellement destinées à deux visions différentes.

Le document US-A-4172662 décrit une lunette comprenant une série de lentilles, et entre autres un diaphragme pourvu d'un horizon artificiel. Ce dispositif est destiné à mesurer des angles au sein d'un microscope.

Le document US-A-4185903 décrit un dispositif qui permet de stabiliser de manière spatiale une photocellule sur une caméra. Ce dispositif très complexe comprend entre autres des moyens afin de permettre cette stabilisation spatiale de la photocellule.

### Solutions proposées par l'invention.

L'invention porte sur des lunettes au sens mentionné ci-dessus, et plus particulièrement sur une monture de lunettes selon la revendication 1.

Pour éviter que des mouvements brusques ou simplement le fait de marcher ne provoquent des oscillations entretenues du dispositif, il est avantageux de prévoir un moyen temporisateur ou amortisseur.

Différentes formes d'exécution sont possibles selon l'invention.

Le principe sur lequel toutes les formes d'exécution reposent est le fait qu'il existe un repère devant matérialiser la ligne d'horizon artificiel. Ce repère peut par exemple être constitué par une ligne tracée sur ou incorporée ou appliquée à des verres, mais également en un repère matérialisé par deux secteurs du verre de couleurs différentes ou de teintes contrastées.

Le repère peut également être constitué par une zone plus ou moins large, par exemple plus claire, se différenciant de deux zones voisines.

Dans le cas où les verres sont montés de façon à pourvoir tourner dans la monture, un dispositif adéquat maintient ledit repère perpendiculaire au sens de la gravité.

Pour l'exécution pratique de ce montage, différentes techniques et options sont possibles. On peut par exemple envisager que les verres sont tournants dans une gorge découpée dans la monture et éventuellement avec un montage périphérique du type roulement à billes.

On peut également envisager que les verres soient supportés par des pistons qui flottent sur un liquide de densité adéquate. Ce liquide peut être contenu dans un tube appliqué contre ou dans la monture de la lunette.

Le verre contenant ce dispositif ne doit pas nécessairement être celui prévu pour l'utilisation des lunettes, en particulier des lunettes de correction de la vue, habituelles de l'utilisateur. Divers systèmes qualifiés généralement d'appliques, c'est-à-dire de verres superposés aux verres optiques, sont possibles.

On peut également prévoir un verre fixe et un verre tournant muni du repère monté sur un axe commun.

Il est également possible de prévoir une barrette mobile montée sur un axe appliqué sur un verre fixe ou une barrette directement supportée par les pistons. Dans ce dernier cas on peut même envisager une absence de verres dans les montures.

Selon une autre forme de réalisation, une bille aimantée ou un autre élément tel qu'un galet peut coulisser dans un tube appliqué contre ou dans une monture. Le verre est muni d'une plaque métallique ou d'un autre élément métallique, de manière que le déplacement de la bille entraîne celui du verre.

Selon encore une autre forme d'exécution on peut également inclure entre deux verres collés de façon étanche, deux liquides, de densité et de coloration différente, éventuellement séparés par un flotteur. On peut également y inclure partiellement un seul liquide sur lequel repose éventuellement un flotteur. En l'absence de flotteur il est préférable que le liquide soit coloré afin de créer un horizon artificiel.

Selon une forme d'exécution encore différente, on peut envisager de prévoir, entre deux verres collés de manière étanche, un élément monté sur un axe et qui permet de symboliser l'horizon artificiel. Cet élément peut être une barrette, un verre présentant deux secteurs de couleurs différentes, une demi-lune ou toute autre forme permettant d'atteindre le même but. En outre, on ajoute au sein des deux verres collés un liquide qui permet de jouer le rôle d'amortisseur.

### Brève description des dessins.

- La figure 1: représente schématiquement une vue partielle d'une monture de lunettes à verres tournants munis d'une ligne matérialisant un horizon artificiel.
- Les figures 2 et 3: représentent schématiquement des verres dans lesquels la ligne d'horizon artificiel est matérialisée respectivement par des contrastes de deux couleurs ou teintes et par une zone se différenciant de deux zones voisines par un contraste de couleurs ou de teintes.
- La figure 4: représente schématiquement un dispositif à verres tournants montés sur roulements.
- La figure 5: représente schématiquement un dispositif à verres tournants montés sur pistons.
- La figure 6: représente schématiquement une superposition à un verre fixe d'un verre tournant à horizon artificiel.
- La figure 7: représente schématiquement une conception à barrettes mobiles.
- La figure 8: représente schématiquement une conception de verres tournants à attraction magnétique.
- Les figures 9 à 12: représentent plusieurs formes d'exécution dans le cas où l'on choisit de prendre deux verres collés l'un à l'autre de manière étanche et comprenant en leur sein un liquide.

Dans les différentes figures, des repères identiques seront utilisés pour des éléments constitutifs identiques ou similaires.

### Description de plusieurs formes d'exécution préférées

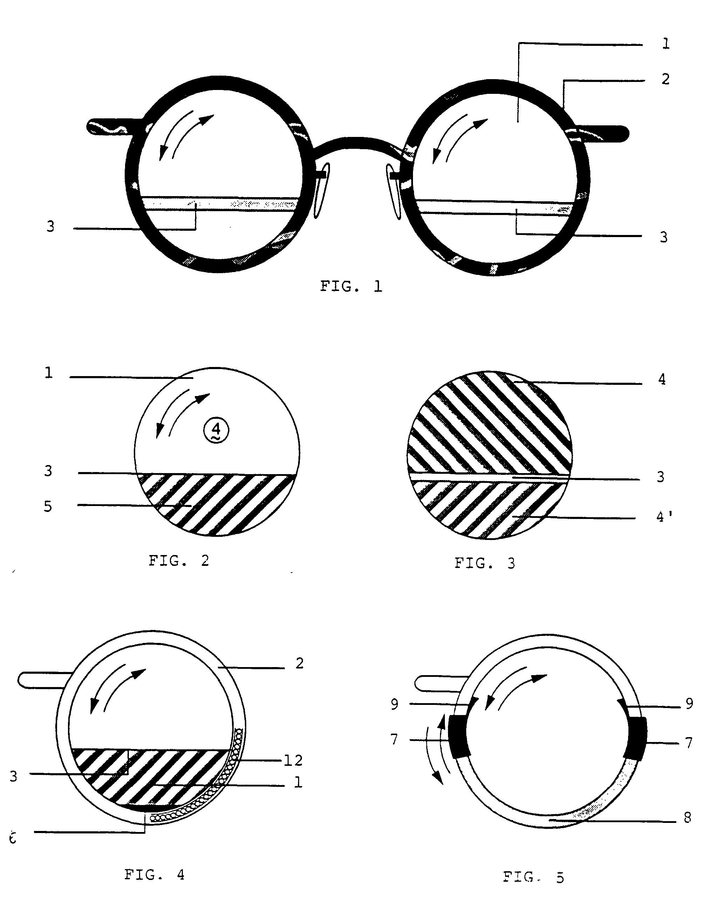

Dans la figure 1, un verre 1 est monté dans la monture 2. Sur ce verre ou dans ce verre, on a tracé, incorporé ou appliqué une ligne 3 destinée à matérialiser un horizon artificiel pour l'utilisateur qui porte ces lunettes. Du fait que le verre est monté de façon à pouvoir tourner dans la monture, et qu'il est convenablement lesté à sa partie inférieure, il matérialisera une ligne d'horizon constante pour l'utilisateur quels que soient les mouvements auxquels celui-ci est soumis.

Eventuellement, on pourrait envisager l'absence totale de verres. Dans ce cas, seule la monture 2 est pourvue d'un élément mobile permettant de créer un horizon artificiel 3.

Dans la figure 2, la ligne d'horizon est matérialisée par le contraste entre un premier secteur 4 et un second secteur 5, qui sont de teintes ou de couleurs différentes.

Dans la figure 3, la ligne d'horizon est matérialisée par une zone 3 comprise entre deux zones 4 et 4' dont la couleur ou la teinte est contrastée par rapport à la première zone 3.

Dans la figure 4, on a représenté une disposition comportant une monture circulaire 2 recevant un verre mobile 1 et pouvant tourner sous l'effet d'un roulement périphérique 12. On a symbolisé par le repère 6 le lest. Dans cette forme d'exécution, le verre tournant est mobile dans une gorge découpée dans la monture.

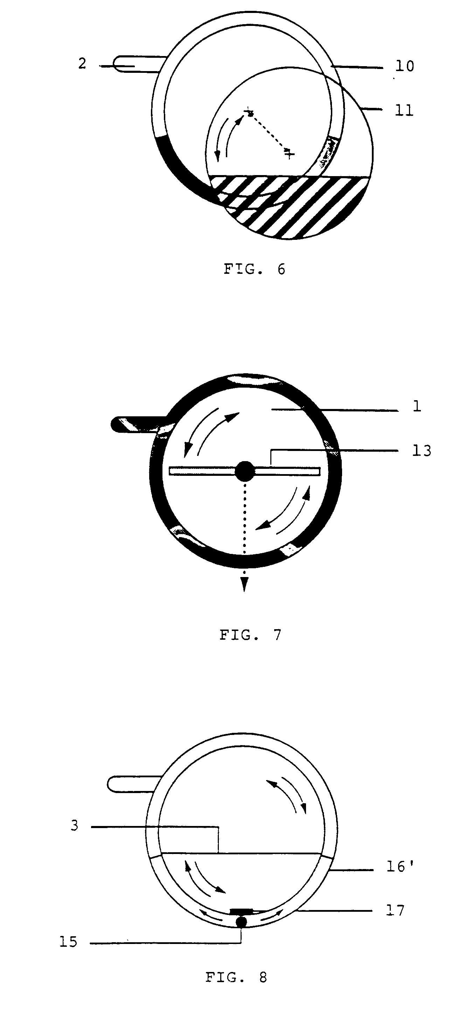

Dans la figure 5, on a représenté un dispositif à pistons flottant sur un liquide de densité appropriée. Les repères 7 indiquent deux pistons flottant dans un tube 8 contenant un liquide de densité appropriée. Les tiges de fixation 9 permettent la fixation du piston au verre. Le tube 8 contenant le liquide est appliqué contre ou dans une monture de lunettes.

Dans la figure 6, on a représenté un verre fixe 10 tel qu'un verre correcteur monté de la manière classique dans une monture 2. On lui superpose un verre tournant 11 mobile sur un axe et qui maintient le verre tournant devant le verre fixe.

Dans la figure 7, on a monté sur un verre par un axe une barrette mobile 13. Des moyens appropriés doivent bien entendu être prévus pour que un effet de lestage se produise, qui maintient la barrette 13 perpendiculaire au sens de la gravité.

Dans la figure 8, on a recours à une bille ou à un galet aimanté 15 coulissant dans un tube 16 appliqué sur ou monté dans une monture. Le verre est muni d'une plaque métallique 17 ou d'un autre élément métallique, de manière que le déplacement de la bille entraîne le déplacement du verre. Dans cette conception, la bille 15 circule librement dans le tube et subit l'effet de la gravité. Elle a donc pour effet, à cause de ses caractéristiques d'aimantation, d'attirer toujours vers le point le plus bas la partie métallique en assurant ainsi un horizon artificiel constant. On pourrait bien entendu inverser les fonctions, c'est-à-dire avoir recours à une partie métallique 17 aimantée de manière à ce que cette partie métallique aimantée soit attirée simplement par le caractère métallique de la bille 15.

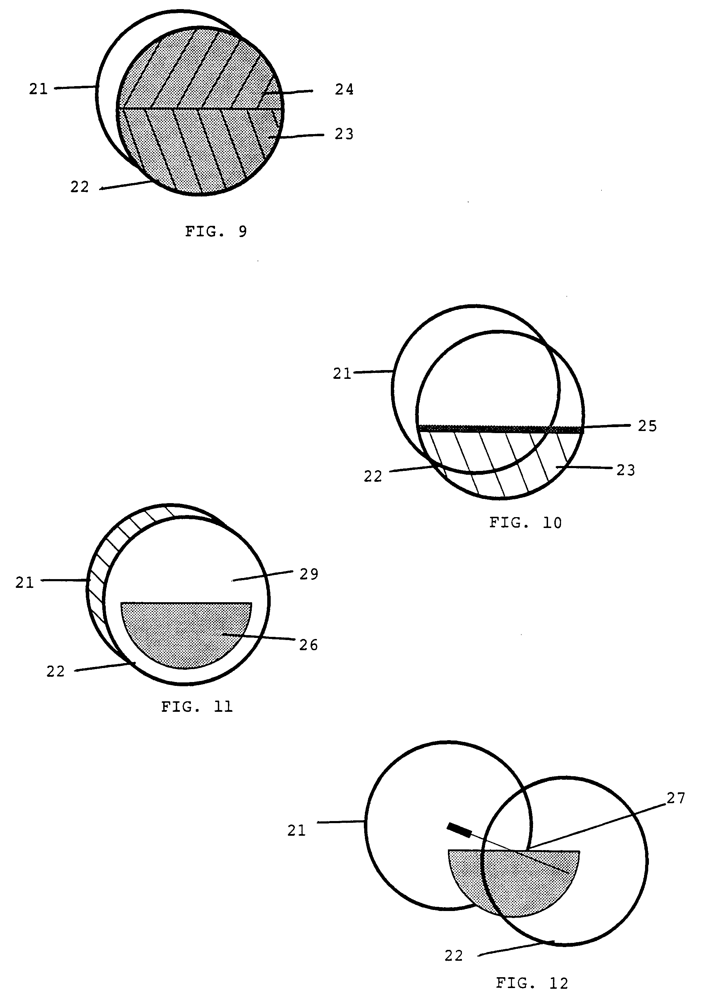

La figure 9 représente une forme d'exécution dans laquelle on a choisi de prendre deux verres 21 et 22 collés de manière étanche et comprenant dans leur interstice au moins un liquide 23. De préférence, on prévoit la présence de deux liquides 23 et 24 de couleur et de densité différente.

Selon une autre forme d'exécution telle que décrite plus précisément à la figure 10, on peut envisager de disposer un flotteur 25 soit sur le liquide 23, soit entre les deux liquides 23 et 24 (non représentée).

Les figures 11 et 12 décrivent deux autres formes d'exécution fort proches des précédentes dans le cas où l'on utilise comme ligne d'horizon un repère mobile 26. Ce repère peut se présenter sous forme de barrette, de demi-lune, de verre coloré. Ce repère se déplace soit sur un axe 27 traversant les deux verres, ainsi que cela est représenté à la figure 12, soit par un autre moyen tel qu'un roulement à billes (non représenté). Il convient de noter que dans l'interstice compris entre les verres 21 et 22, on préfère disposer un liquide 29 qui joue le rôle d'amortisseur.

Bien que l'on ait décrit des formes d'exécution préférées de l'invention, il doit être bien entendu que de nombreuses variantes d'exécution restent possibles dans le cadre de cette invention telle que définie par les revendications annexées.

## Revendications

1. Monture de lunettes pourvue ou non de verre, **caractérisée en ce qu'**elle comporte un repère mobile solide matérialisant un horizon artificiel (3) maintenu en position horizontale permanente par l'effet de la gravité quels que soient les mouvements de la monture (2) ou de la tête de l'utilisateur qui supporte cette monture.

2. Monture de lunettes selon la revendication 1, **caractérisée en ce que** ledit repère mobile est constitué par une ligne tracée sur, ou incorporée dans, ou appliquée à un verre (1).

3. Monture de lunettes selon la revendication 1, **caractérisée en ce que** ledit repère mobile est constitué par deux secteurs de verre (45) de couleurs différentes ou de teintes contrastées.

4. Monture de lunettes selon la revendication 1, **caractérisée en ce que** ledit repère mobile est constitué par une demi-lune, de préférence montée sur un axe (27).

5. Monture de lunettes selon la revendication 1, **caractérisée en ce que** ledit repère mobile est constitué par une zone plus ou moins large se différenciant des zones voisines (4, 4') par sa teinte, sa couleur ou sa luminosité dans le verre.

6. Monture de lunettes selon l'une des revendications 2 à 5, **caractérisée en ce que** le ou les verres (1) comprenant ledit repère mobile effectuent un mouvement de rotation par rapport à la monture sous l'effet d'un roulement périphérique.

7. Monture de lunettes selon la revendication 1, **caractérisée en ce que** ledit repère mobile est constitué par une barrette (13) externe au verre et qui est maintenue en position horizontale permanente.

8. Monture de lunettes selon l'une des revendications précédentes, **caractérisée en ce qu'**elle comprend des moyens temporisateurs ou amortisseurs dudit repère mobile, de préférence constitués par des pistons (7) ou même un liquide (29).

9. Monture de lunettes selon la revendication 1, **caractérisée en ce que** ledit repère mobile est disposé entre deux verres (21, 22) collés de façon étanche et entre lesquels est inclus au moins un liquide (23), ledit repère mobile étant constitué par une barrette (25), une demi-lune (26), un ou plusieurs secteurs de verre (29) ou tout autre élément ayant pour fonction de représenter un horizon artificiel (3).

10. Monture de lunettes selon la revendication 1, **caractérisée en ce que** ledit repère mobile est disposé entre deux verres (21, 22) collés de façon étanche et entre lesquels sont inclus deux liquides (23, 24) de densité et de coloration différentes, ledit repère mobile étant constitué par une barrette (25), une demi-lune (26), un ou plusieurs secteurs de verre (29) ou tout autre élément ayant pour fonction de représenter un horizon artificiel (3).

11. Monture de lunettes selon la revendication 9 ou 10, **caractérisée en ce que** ledit repère mobile se déplace soit sur un axe (27), soit sur un roulement (12).

12. Monture de lunettes selon la revendication 11, **caractérisée en ce que** le liquide (29) joue le rôle d'amortisseur.

13. Monture de lunettes selon la revendication 9 ou 10, **caractérisée en ce que** le repère mobile est un flotteur (25) disposé soit sur un liquide (23), soit entre les deux liquides (23, 24).

## Claims

1. A spectacle frame provided or not with a glass, **characterized in that** it comprises a solid mobile mark materializing an artificial horizon (3) maintained in a permanent horizontal position as a result of gravity whatever the frame (2) or the user's head movements supporting said frame are.

2. A spectacle frame according to claim 1, **characterized in that** said mobile mark consists in a line drawn on, or incorporated into or applied to a glass (1).

3. A spectacle frame according to claim 1, **characterized in that** said mobile mark consists in two glass areas (45) with different colours or contrasting tints.

4. A spectacle frame according to claim 1, **characterized in that** said mobile mark consists in a half-moon, preferably mounted on an axis (27).

5. A spectacle frame according to claim 1, **characterized in that** said mobile mark consists in a more or less wide area differing from the surrounding areas (4,4') in tint, colour and luminosity in the glass.

6. A spectacle frame according to any one of claims 2 to 5, **characterized in that** the glasses (1) comprising said mobile mark perform a rotation movement relative to the frame under the action of a circumferential ball bearing.

7. A spectacle frame according to claim 1, **characterized in that** said mobile mark consists in a small bar (13) external to the glass and being maintained in a permanent horizontal position.

8. A spectacle frame according to any one of preceding claims, **characterized in that** it comprises delaying or buffering means of said mobile mark, preferably comprising pistons (7) or even a liquid (29).

9. A spectacle frame according to claim 1, **characterized in that** said mobile mark is arranged between hermetically sealed two glasses (21, 22) and therebetween at least one liquid is included (23), said mobile mark consisting in a small bar (25), a half-moon (26), one or more glass areas (29) or any other element, the function of which is to represent an artificial horizon (3).

10. A spectacle frame according to claim 1, **characterized in that** said mobile mark is arranged between two hermetically sealed glasses (21, 22) and therebetween two liquids are included (23, 24) which are different in density and tint, said mobile mark comprising a small bar (25), a half-moon (26), one or more glass areas (29) or any other element, the function of which is to represent an artificial horizon (3).

11. A spectacle frame according to claim 9 or 10, **characterized in that** said mobile mark moves either along an axis (27) or on a ball bearing (12).

12. A spectacle frame according to claim 11, **characterized in that** the liquid (29) plays the part of a buffer.

13. A spectacle frame according to claim 9 or 10, **characterized in that** the mobile mark is a floater (25) arranged either on one liquid (23) or between the two liquids (23, 24).

## Patentansprüche

1. Brillenfassung, mit Gläsern ausgestattet oder nicht, **dadurch gekennzeichnet, dass** sie eine bewegliche und dauerhafte, einen künstlichen Horizont (3) materialisierende Markierung aufweist, welche durch die Wirkung der Schwerkraft in einer permanenten, horizontalen Stellung gehalten wird, gleich welche Bewegungen von der Fassung (2) oder von dem die Fassung tragenden Kopf des Benutzers durchgeführt werden.

2. Brillenfassung gemäß Anspruch 1, **dadurch gekennzeichnet, dass** die bewegliche Markierung aus einer Linie besteht, welche auf das Glas (1) aufgezeichnet, demselben einverleibt oder an demselben befestigt ist.

3. Brillenfassung gemäß Anspruch 1, **dadurch gekennzeichnet, dass** die bewegliche Markierung aus zwei Glassektoren (45) von verschiedener Farbe oder von kontrastierenden Tönungen besteht.

4. Brillenfassung gemäß Anspruch 1, **dadurch gekennzeichnet, dass** die bewegliche Markierung aus einem Halbmond besteht, der vorzugsweise auf einer Achse (27) montiert ist.

5. Brillenfassung gemäß Anspruch 1, **dadurch gekennzeichnet, dass** die bewegliche Markierung aus einer mehr oder weniger breiten Zone besteht, die sich von den benachbarten Zonen (4, 4') durch ihre Tönung, ihre Farbe oder die Helligkeit in dem Glas unterscheidet.

6. Brillenfassung gemäß irgendeinem der Ansprüche 2 bis 5, **dadurch gekennzeichnet, dass** das Glas oder die Gläser (1) mit der beweglichen Markierung unter der Einwirkung eines Umfangswälzlagers eine Rotationsbewegung in Bezug. auf die Fassung durchführt bzw. durchführen.

7. Brillenfassung gemäß Anspruch 1, **dadurch gekennzeichnet, dass** die bewegliche Markierung aus einem in Bezug auf das Glas äußeren Balken (13) besteht, der in einer permanenten horizontalen Stellung gehalten wird.

8. Brillenfassung gemäß einem der vorhergehenden Ansprüche, **dadurch gekennzeichnet, dass** sie verzögernde oder dämpfende Hilfsmittel für die bewegliche Markierung aufweist, welche vorzugsweise aus Kolben (7) oder gar aus einer Flüssigkeit bestehen.

9. Brillenfassung gemäß Anspruch 1, **dadurch gekennzeichnet, dass** die bewegliche Markierung zwischen zwei Gläsern (21, 22) angeordnet ist, welche auf dichte Weise verklebt sind und zwischen welchen mindestens eine Flüssigkeit (23) eingeschlossen ist, wobei die bewegliche Markierung aus einem Balken (25), aus einem Halbmond (26), aus einem oder mehreren Glassektoren (29) oder aus jedem anderen Element besteht, welchem die Funktion zukommt einen künstlichen Horizont (3) darzustellen.

10. Brillenfassung gemäß Anspruch 1, **dadurch gekennzeichnet, dass** die bewegliche Markierung zwischen zwei Gläsern (21, 22) angeordnet ist, welche auf dichte Weise verklebt sind und zwischen welchen mindestens zwei Flüssigkeiten (23, 24) mit verschiedenen Dichten und Färbungen eingeschlossen sind, wobei die bewegliche Markierung aus einem Balken (25), aus einem Halbmond (26), aus einem oder mehreren Glassektoren (29) oder aus jedem anderen Element besteht, welchem die Funktion zukommt einen künstlichen Horizont (3) darzustellen.

11. Brillenfassung gemäß Anspruch 9 oder 10, **dadurch gekennzeichnet, dass** die bewegliche Markierung sich entweder auf einer Achse (27) oder auf einem Lager (12) bewegt.

12. Brillenfassung gemäß Anspruch 11, **dadurch gekennzeichnet, dass** die Flüssigkeit (29) die Rolle eines Dämpfers spielt.

13. Brillenfassung gemäß Anspruch 9 oder 10, **dadurch gekennzeichnet, dass** die bewegliche Markierung ein Schwimmkörper (25) ist, der entweder auf einer Flüssigkeit (23) oder zwischen zwei Flüssigkeiten (23, 24) angeordnet ist.
